# EUROPEAN PATENT SPECIFICATION

(11) **EP 3 829 926 B1**
(45) Date of publication and mention of the grant of the patent: **11.01.2023**
(21) Application number: 19739320.0
(22) Date of filing: 18.07.2019
(51) Int. Cl.: B60P 1/00, B60P 3/00

(54) **A TRAILER CARGO MONITORING APPARATUS FOR A VEHICLE**
VORRICHTUNG ZUR ÜBERWACHUNG DER ANHÄNGERLAST FÜR EIN FAHRZEUG
APPAREIL DE SURVEILLANCE DE CARGAISON DE REMORQUE POUR UN VÉHICULE

(30) Priority: 27.07.2018 EP 18465551; 27.03.2019 US 201916365818
(43) Date of publication of application: 09.06.2021
(73) Proprietor: Continental Autonomous Mobility Germany GmbH, 85057 Ingolstadt (DE)
(72) Inventor: ONICA, Dan, 90411 Nürnberg (DE)
(74) Representative: Continental Corporation
(86) International application number: PCT/EP2019/069360
(87) International publication number: WO 2020/020736

(56) References cited:
- DE-A1-102014 226 108
- DE-A1-102016 221 422
- JP-A- 2013 035 399

## Description

The invention relates to a trailer cargo monitoring apparatus, a vehicle comprising the trailer cargo monitoring apparatus, a method for monitoring the cargo within the trailer, a computer program element and a computer-readable medium.

Driving with a trailer may sometimes be exhausting and stressful for the driver, for example, if the driver is not used to drive with the trailer or he drives in urban areas with heavy traffic.

DE 10 2014 226 108 A1 discloses an apparatus and a method for detecting an unsecured cargo that is loaded in a loading space of a motor vehicle, wherein the loading space can be represented by a trailer. The apparatus includes a camera installed inside the cargo loading space of the motor vehicle to capture images of the cargo. Based on the captured images a difference between a first cargo position and a later, second cargo position is determined, wherein a notification is issued to the driver of the motor vehicle if the determined position difference fulfils a predetermined triggering criterion.

JP 2013 035399 A discloses a cargo compartment monitoring device for monitoring the cargo that is loaded in a cargo compartment of a motor truck. The device comprises a camera installed inside the cargo compartment, wherein the condition in the cargo compartment is analyzed based on the images acquired with the camera, and wherein a warning is issued to the driver of the motor truck if an overturing of the cargo is detected.

DE 10 2016 221422 A1 discloses the preamble of claim 1.

It may be an object of the present invention to increase safety in traffic.

The object of the present invention is solved by the subject-matter of the independent claims, wherein further embodiments are incorporated in the dependent claims.

A first aspect of the invention is related to a trailer cargo monitoring apparatus for a vehicle. The trailer cargo monitoring apparatus comprises a sensor arrangement and a calculation unit, such as a processing circuit or processor. The sensor arrangement is configured to capture image data of a cargo within a trailer, wherein the trailer is coupled to the vehicle. The calculation unit is configured to analyse the captured image data and to determine an actual position of the cargo to monitor the cargo. The calculation unit is further configured to inform the driver of the vehicle, if the actual position of the cargo differs from a predefined position by more than a predefined threshold.

This may lead to increased safety. The sensor arrangement may comprise a camera, for example the rear view camera for capturing image data of the cargo. The sensor arrangement may capture image data of the trailer and cargo within the trailer, i.e. on a cargo area or platform of the trailer. The calculation unit may analyse the captured image data and determine the position of the cargo within the trailer to monitor the cargo. The calculation unit may compare the actual position of the cargo with a predefined position of the cargo based on the captured image data. Alternatively or in addition, the predefined position may be a reference position, which is defined before the vehicle starts driving. Further, the calculation unit may inform or warn the driver, if the actual position of the cargo differs from the predefined position of the cargo by more than a predefined threshold. In other words, if the cargo has moved or the position of the cargo has shifted, the position shift may be determined by the calculation unit by comparing with the predefined position of the cargo. Furthermore, if the position shift or the difference in position exceeds the predefined threshold, for example 5, 10 or 15 cm, the driver gets informed or receives a warning. Informing the driver may also be a warning via an indication light, e.g. in the dashboard, or via display or via a user interface.

It should be understood that the term refers to objects on the cargo area or platform of the trailer. For example the cargo may be am item of furniture, e.g. a couch, or building materials, e.g. cement, or a bike. The cargo may be secured by belts or just placed loose on the cargo platform. Alternatively or in addition, also the cargo may comprise a plurality of different objects. In this case all different objects may be monitored by the before and hereinafter described trailer cargo monitoring apparatus.

The actual position of the cargo may have changed due to a driving manoeuvre, such as breaking or driving around a corner. If objects or parts of the cargo fall off the trailer, this may be monitored by the trailer cargo monitoring apparatus. The trailer cargo monitoring apparatus is configured to inform the driver of a the change in position or a change in the state of the cargo. For example, if a position shift of the cargo takes place, the driver may rearrange the cargo or he may secure the cargo more thoroughly.

The calculation unit may be a processor or a calculation circuit. Further, the calculation unit may comprise a storage unit.

It should be noted, that the calculation unit may be configured to detected if a trailer is coupled to the vehicle and whether this trailer comprises cargo to be monitored. If no trailer or cargo is detected, the trailer cargo monitoring apparatus may be turned off.

The sensor arrangement is arranged at a rear end of the vehicle facing in the direction of the trailer. It should be understood, that the viewing angle of the sensor arrangement should be configured to monitor the cargo of a trailer. Preferably, the sensor arrangement is arranged at a higher position on the vehicle, for example in a spoiler.

According to a further embodiment, the sensor arrangement is configured to capture reference image data of the cargo within the trailer before the vehicle starts driving and the calculation unit is configured to determine a position shift of the cargo by comparing the image data captured by the sensor arrangement with the reference image data.

The reference image data may be captured before the vehicle starts driving. The start of driving may be detected if the velocity of the vehicle is greater than 2m/s. The reference image may be stored on a memory device of the trailer cargo monitoring apparatus. Further, this reference image data may be captured before each trip or start of the vehicle to have actual reference data.

According to an embodiment, the sensor arrangement comprises a camera. The sensor arrangement may further comprise a radar, a lidar or an ultrasonic sensor for capturing image data of the cargo within the trailer.

According to an embodiment, the trailer is an open trailer. It should be understood that the trailer cargo monitoring apparatus works in particular with open trailers, wherein the cargo can be seen from the rear portion of the vehicle. Open trailer refers to a trailer without a cover or an installation covering the cargo on the cargo platform of the trailer.

According to a further embodiment, the calculation unit is configured to inform the driver of the vehicle via an indication lamp and/or via a user interface, if the position shift exceeds the predefined threshold, wherein the predefined threshold may be 5, 10 or 15cm.

According to yet another aspect of the invention, a vehicle comprising the above and hereinafter described trailer cargo monitoring apparatus is provided.

The vehicle may, for example, be a motor vehicle, such as a car, bus or truck.

A further aspect of the invention provides a method for monitoring a cargo of a trailer that is coupled to a vehicle, comprising the steps of:
- Capturing, by a sensor arrangement that is arranged at a rear end of the vehicle facing in the direction of the trailer, image data of the cargo within the trailer;
- Analysing, by a calculation unit, the captured image data;
- Determining, by the calculation unit, an actual position of the cargo to monitor the cargo; and
- Informing, by the calculation unit, the driver of the vehicle if the actual position of the cargo differs from a predefined position by more than a predefined threshold.

According to another aspect of the invention, there is provided a computer program element for controlling the trailer cargo monitoring apparatus as previously described which, when the computer program element is executed by the calculation unit or by a processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

Exemplary embodiments will be described in the following with reference to the following drawings:
Fig. 1 shows a block diagram of a trailer cargo monitoring apparatus according to an embodiment.
Fig. 2 shows a schematic view of a vehicle with a trailer cargo monitoring apparatus towing a trailer according to an embodiment.
Fig. 3 shows a vehicle with the trailer cargo monitoring apparatus according to an embodiment.
Fig. 4 shows a flow chart of a method for monitoring a cargo of a trailer according to an embodiment.
Fig. 5 shows another flow chart of a method for monitoring a cargo of a trailer according to an embodiment.

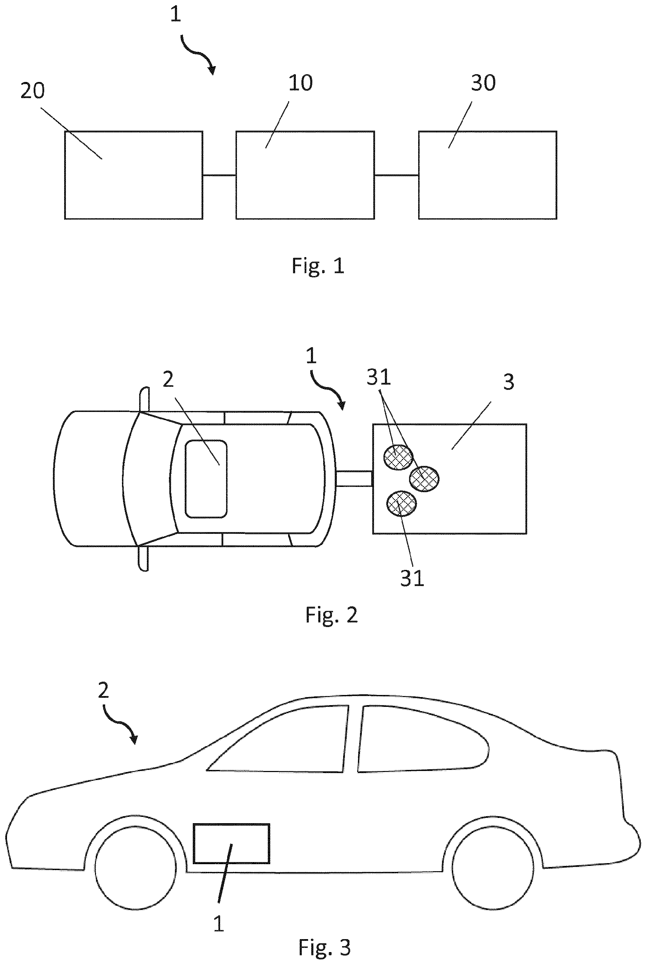

Fig. 1 shows a block diagram of a trailer cargo monitoring apparatus 1. The trailer cargo monitoring apparatus 1 comprises a sensor arrangement 20 and a calculation unit 10. Further, the trailer cargo monitoring apparatus may comprise a warning unit 30, such as an indication lamp, a display or a user interface. The sensor arrangement 20 may be configured to capture image data of a cargo within a trailer, which is coupled to a vehicle. The sensor arrangement 20 may comprise a camera, for example, a rear view camera of the vehicle, but the sensor arrangement 20 may also comprise a radar, lidar or ultrasonic sensor. The sensor arrangement 20 may be preferably arranged at the rear end of the vehicle facing the trailer with the cargo to be monitored. The sensor arrangement 20 may be configured to capture several images of the cargo within the trailer, such as a video or to capture image data in constant time intervals, for example every minute or every ten seconds. For a better view of the cargo and therefore a better monitoring of the cargo, the trailer may be an open trailer, such that the sensor arrangement 20 at the rear end of the vehicle is able to capture image data of the cargo within the trailer. Further, the sensor arrangement 20 may be configured to capture reference image data before the vehicle starts driving. The start of the vehicle may be determined if the velocity of the vehicle is greater than 2m/s. The calculation unit 10 may be configured to analyse the captured image data and to determine, based on this image data, the actual position of the cargo within the trailer. The cargo may be objects, such as furniture, bikes cement or a combination thereof. By determining the actual position of the cargo or the objects of the cargo, the actual state of the cargo may be monitored. Thus, the position of the cargo and if the cargo is still present and not fallen off the trailer. In other words, the calculation unit 10 may be configured to determine whether the state (i.e. position) of the cargo is OK or not. Further, the calculation unit 10 may be configured to inform or warn the driver if the actual position of the cargo or parts of the cargo differ from a predefined position of the cargo by more than a predefined threshold. The calculation unit 10 may be configured to compare the actual position or the presence of the cargo in the captured image data with the position or the presence of the cargo in the reference image data. If the position of the cargo has changed more than a predefined threshold, e.g. 5 or 10cm, the driver may be informed or warned via the warning unit 30. The warning unit may be an indication lamp, a display or a user interface. Since the trailer cargo monitoring apparatus 1 informs the driver over a position shift of the cargo or a change in the state of the cargo, the driver drives more relaxed and may focus more on the traffic, since he does not have to look in the rear view mirror and monitor his cargo.

Fig. 2 shows a vehicle 2 having a trailer cargo monitoring apparatus 1 and a trailer 3, which is coupled to the vehicle 2. Further, some objects 31 are present within the trailer 3 on the cargo platform of the trailer 3, wherein these objects 31 define a cargo 31 of the trailer 3. The trailer cargo monitoring apparatus 1 is configured to monitor the cargo 31 by comparing the actual position of the cargo 31 with a predefined or reference position of the cargo 31. If the cargo 31 shifts its position, for example due to a breaking or driving manoeuvre or since the cargo 31 was not secured properly, the trailer cargo monitoring apparatus 1 informs or warns the driver over this position shift of the cargo 31. By the use of the trailer cargo monitoring apparatus 1, the driver drives more relaxed and he can focus more on the traffic as he does not have to look in the rear view mirror for monitoring his cargo.

Fig. 3 shows a vehicle 2 with the trailer cargo monitoring apparatus 1. Preferably, the sensor arrangement of the trailer cargo monitoring apparatus 1 is located at a rear end of the vehicle 1 and faces backwards to view the trailer to be monitored. In should be noted, that a rear view camera of the vehicle 2 may be used as the sensor arrangement of the trailer cargo monitoring apparatus 1.

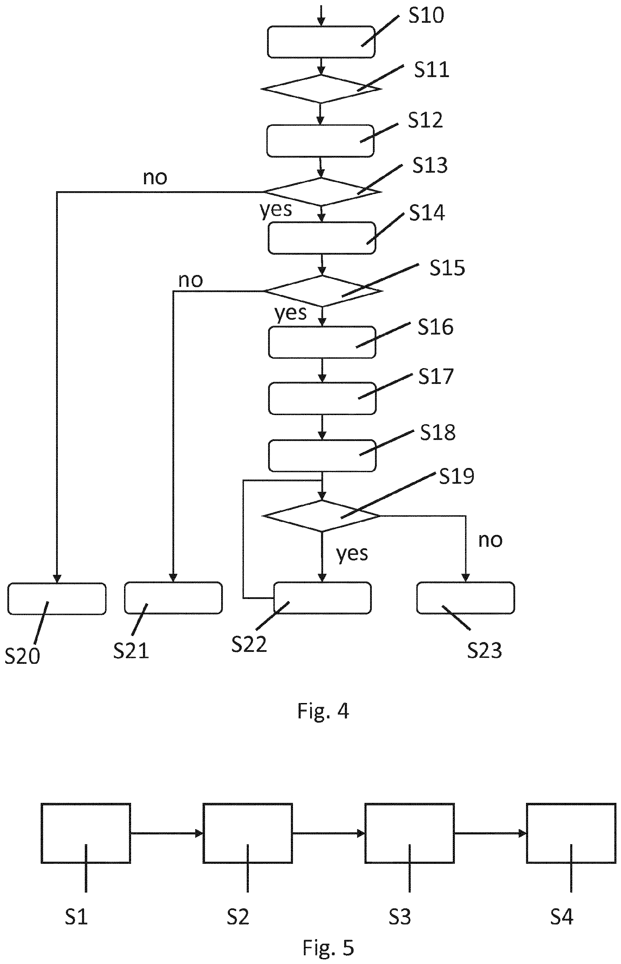

Fig. 4 shows a flow chart of a method for monitoring a cargo of a trailer. In step S10 a vehicle state and the intention of starting a new trip is determined. In step S11, a new trip is recognised if the velocity of the vehicle is greater than 2m/s. Subsequent, in step S12 the presence of a trailer is determined. In step S13, it is decided based on the presence of the trailer, which step should be executed next. If no trailer is present, the method goes to step S20 and it is recognized that no trailer is coupled to the vehicle and the method ends for this trip of the vehicle. If step 13 recognizes the presence of the trailer, the method goes to step S14, in which the trailer position and shape is determined. In the following step S15 it is decided if a cargo is visible within the trailer. If no cargo is visible, the method goes to step S21 and the method ends for this trip of the vehicle. If the cargo is visible within the trailer, the method determines in step S16 objects as cargo in the image data based on signature features of the objects. In step S17 the initial positions of all cargo objects are stored as reference positions. In step S18 the actual position of the cargo objects are determined. In step S19, the actual position of the cargo is compared to the reference position of the cargo. If the position has changed, the method goes to step S23, since the state of the cargo is not OK. Then the driver of the vehicle may gets informed or receives a warning.

If the position remains the same. Thus, no position shift appears, the method goes to step S22, in which the cargo state is OK. After step S22, the method goes back to step S19 for further monitoring the cargo.

Fig. 5 shows a flow chart of a method for monitoring a cargo of a trailer. In step S1 a sensor arrangement captures image data of the cargo within a trailer. Preferably, the trailer is an open trailer and the sensor arrangement is a rear view camera of a vehicle. In step S2 a calculation unit analyses the captured image data. In particular, the calculation unit identifies the cargo within the trailer and the calculation unit may define a reference image. In step S3, the calculation unit determines the actual position of the cargo in the trailer to monitor the cargo. Further, the calculation unit may compare the actual image data with the defined reference image to determine a position shift of the cargo. In step S4, the calculation unit informs or warns the driver, if the actual position of the cargo differs from the predefined or reference position of the cargo by more than a predefined threshold. In other words, if the position shift of the cargo exceeds the predefined threshold, the drive receives an information via a warning lamp or the driver receives a message over a display or a user interface.

## Claims

1. A trailer cargo monitoring apparatus (1) for a vehicle (2), comprising:
- a sensor arrangement (20); and
- a calculation unit (10),
wherein the sensor arrangement (20) is configured to capture image data of a cargo (31) within a trailer (3), wherein the trailer (3) is coupled to the vehicle (2);
wherein the calculation unit (10) is configured to analyse the captured image data and to determine an actual position of the cargo (31) to monitor the cargo (31),
wherein the calculation unit (10) is further configured to inform the driver of the vehicle (2), if the actual position of the cargo (31) differs from a predefined position by more than a predefined threshold,
**characterized in that**
the sensor arrangement (20) is arranged at a rear end of the vehicle (2) facing in the direction of the trailer (3) .

2. The trailer cargo monitoring apparatus (1) according to claim 1,
wherein the sensor arrangement (20) is configured to capture a reference image data of the cargo (31) within the trailer (3) before the vehicle (2) starts driving,
wherein the calculation unit (10) is configured to determine a position shift of the cargo (31) by comparing the image data captured by the sensor arrangement (20) with the reference image data.

3. The trailer cargo monitoring apparatus (1) according to any one of the preceding claims,
wherein the sensor arrangement (20) comprises a camera.

4. The trailer cargo monitoring apparatus (1) according to any one of the preceding claims,
wherein the trailer (3) is an open trailer.

5. The trailer cargo monitoring apparatus (1) according to any one of the preceding claims,
wherein the calculation unit (10) is configured to inform the driver of the vehicle (2) via an indication lamp and/or via a user interface, if the position shift exceeds the predefined threshold.

6. A vehicle (2) with a trailer cargo monitoring apparatus (1) according to any one of the claims 1 to 5.

7. A method for monitoring a cargo (31) of a trailer (3) that is coupled to a vehicle (2), comprising the steps of:
- Capturing (S1), by a sensor arrangement (20) that is arranged at a rear end of the vehicle (2) facing in the direction of the trailer (3), image data of the cargo (31) within the trailer (3) ;
- Analysing (S2), by a calculation unit (10), the captured image data;
- Determining (S3), by the calculation unit (10), an actual position of the cargo (31) to monitor the cargo (31); and
- Informing (S4), by the calculation unit (10), the driver of the vehicle (2) if the actual position of the cargo (31) differs from a predefined position by more than a predefined threshold.

8. A computer program element for controlling a trailer cargo monitoring apparatus (1) according to any one of claims 1 to 5 and/or a vehicle (2) according to claim 6, which when executed by a processor of a trailer cargo monitoring apparatus (1) causes the trailer cargo monitoring apparatus (1) to carry out the method according to claim 7.

9. A computer-readable medium, on which a computer program element according to claim 8 is stored.

## Patentansprüche

1. Vorrichtung zur Überwachung der Anhängerlast (1) für ein Fahrzeug (2), die Folgendes umfasst:
- eine Sensoranordnung (20); und
- eine Berechnungseinheit (10),
wobei die Sensoranordnung (20) ausgelegt ist zum Erfassen von Bilddaten einer Last (31) in einem Anhänger (3), wobei der Anhänger (3) mit dem Fahrzeug (2) gekoppelt ist;
wobei die Berechnungseinheit (10) ausgelegt ist zum Analysieren der erfassten Daten und zum Bestimmen einer tatsächlichen Position der Last (31) zum Überwachen der Last (31),
wobei die Berechnungseinheit (10) ferner dazu ausgelegt ist, den Fahrer des Fahrzeugs (2) zu informieren, wenn sich die tatsächliche Position der Last (31) von einer vordefinierten Position um mehr als eine vordefinierte Schwelle unterscheidet,
**dadurch gekennzeichnet, dass**
die Sensoranordnung (20) an einem hinteren Ende des Fahrzeugs (2) angeordnet ist, in die Richtung des Anhängers (3) zeigend.

2. Vorrichtung zur Überwachung der Anhängerlast (1) nach Anspruch 1,
wobei die Sensoranordnung (20) ausgelegt ist zum Erfassen von Referenzbilddaten der Last (31) im Anhänger (3), bevor das Fahrzeug (2) zu fahren beginnt,
wobei die Berechnungseinheit (10) ausgelegt ist zum Bestimmen einer Positionsverschiebung der Last (31) durch Vergleichen der durch die Sensoranordnung (20) erfassten Bilddaten mit den Referenzbilddaten.

3. Vorrichtung zur Überwachung der Anhängerlast (1) nach einem der vorhergehenden Ansprüche,
wobei die Sensoranordnung (20) eine Kamera umfasst.

4. Vorrichtung zur Überwachung der Anhängerlast (1) nach einem der vorhergehenden Ansprüche,
wobei der Anhänger (3) ein offener Anhänger ist.

5. Vorrichtung zur Überwachung der Anhängerlast (1) nach einem der vorhergehenden Ansprüche,
wobei die Berechnungseinheit (10) dazu ausgelegt ist, den Fahrer des Fahrzeugs (2) über eine Anzeigeleuchte und/oder über eine Benutzerschnittstelle zu informieren, wenn die Positionsverschiebung die vordefinierte Schwelle überschreitet.

6. Fahrzeug (2) mit einer Vorrichtung zur Überwachung der Anhängerlast (1) nach einem der Ansprüche 1 bis 5.

7. Verfahren zum Überwachen einer Last (31) eines Anhängers (3), der mit einem Fahrzeug (2) gekoppelt ist, die folgenden Schritte umfassend:
- Erfassen (S1), durch eine Sensoranordnung (20), die am hinteren Ende des Fahrzeugs (2) angeordnet ist, in die Richtung des Anhängers (3) zeigend, von Bilddaten der Last (31) im Anhänger (3);
- Analysieren (S2), durch eine Berechnungseinheit (10), der erfassten Bilddaten;
- Bestimmen (S3), durch die Berechnungseinheit (10), einer tatsächlichen Position der Last (31) zum Überwachen der Last (31); und
- Informieren (S4), durch die Berechnungseinheit (10), des Fahrers des Fahrzeugs (2), wenn sich die tatsächliche Position der Last (31) von einer vordefinierten Position um mehr als eine vordefinierte Schwelle unterscheidet.

8. Computerprogrammelement zum Steuern einer Vorrichtung zur Überwachung der Anhängerlast (1) nach einem der Ansprüche 1 bis 5 und/oder eines Fahrzeugs (2) nach Anspruch 6, das, wenn durch einen Prozessor einer Vorrichtung zur Überwachung der Anhängerlast (1) ausgeführt, die Vorrichtung zur Überwachung der Anhängerlast (1) veranlasst, das Verfahren nach Anspruch 7 auszuführen.

9. Computerlesbares Medium, auf dem ein Computerprogrammelement nach Anspruch 8 gespeichert ist.

## Revendications

1. Appareil (1) de surveillance de cargaison de remorque pour un véhicule (2), comprenant :
- un agencement capteur (20) ; et
- une unité de calcul (10),
l'agencement capteur (20) étant configuré pour capturer des données d'image d'une cargaison (31) à l'intérieur de la remorque (3), la remorque (3) étant accouplée au véhicule (2) ;
l'unité de calcul (10) étant configurée pour analyser les données d'image capturées et pour déterminer une position effective de la cargaison (31) afin de surveiller la cargaison (31),
l'unité de calcul (10) étant configurée en outre pour avertir le conducteur du véhicule (2) si la position effective de la cargaison (31) s'écarte d'une position prédéfinie de plus d'un seuil prédéfini,
**caractérisé en ce que**
l'agencement capteur (20) est agencé au niveau d'une extrémité arrière du véhicule (2) en étant orienté dans la direction de la remorque (3).

2. Appareil (1) de surveillance de cargaison de remorque selon la revendication 1,
dans lequel l'agencement capteur (20) est configuré pour capturer une donnée d'image de référence de la cargaison (31) à l'intérieur de la remorque (3) avant que le véhicule (2) commence à se déplacer,
dans lequel l'unité de calcul (10) est configurée pour déterminer un changement de position de la cargaison (31) en comparant les données d'image capturées par l'agencement capteur (20) à la donnée d'image de référence.

3. Appareil (1) de surveillance de cargaison de remorque selon l'une quelconque des revendications précédentes,
dans lequel l'agencement capteur (20) comprend une caméra.

4. Appareil (1) de surveillance de cargaison de remorque selon l'une quelconque des revendications précédentes,
dans lequel la remorque (3) est une remorque découverte.

5. Appareil (1) de surveillance de cargaison de remorque selon l'une quelconque des revendications précédentes,
dans lequel l'unité de calcul (10) est configurée pour avertir le conducteur du véhicule (2), par le biais d'un voyant et/ou par le biais d'une interfaceutilisateur, si le déplacement de position dépasse le seuil prédéfini.

6. Véhicule (2) pourvu d'un appareil (1) de surveillance de cargaison de remorque selon l'une quelconque des revendications 1 à 5.

7. Procédé de surveillance d'une cargaison (31) d'une remorque (3) qui est accouplée à un véhicule (2), comprenant les étapes suivantes :
- Capture (S1), par un agencement capteur (20) qui est agencé au niveau d'une extrémité arrière du véhicule (2) en étant orienté dans la direction de la remorque (3), de données d'image de la cargaison (31) à l'intérieur de la remorque (3) ;
- Analyse (S2), par une unité de calcul (10), des données d'image capturées ;
- Détermination (S3), par l'unité de calcul (10), d'une position effective de la cargaison (31) afin de surveiller la cargaison (31) ; et
- Avertissement (S4), par l'unité de calcul (10), du conducteur du véhicule (2) si la position effective de la cargaison (31) s'écarte d'une position prédéfinie de plus d'un seuil prédéfini.

8. Élément de programme d'ordinateur pour commander un appareil (1) de surveillance de cargaison de remorque selon l'une quelconque des revendications 1 à 5 et/ou un véhicule (2) selon la revendication 6, qui, lorsqu'il est exécuté par un processeur d'un appareil (1) de surveillance de cargaison de remorque, amène l'appareil (1) de surveillance de cargaison de remorque à mettre en oeuvre le procédé selon la revendication 7.

9. Support lisible par ordinateur, sur lequel est stocké un élément de programme d'ordinateur selon la revendication 8.
